# EUROPEAN PATENT APPLICATION

(11) **EP 4 772 331 A1**
(43) Date of publication of application: **08.07.2026**
(21) Application number: 25150519.4
(22) Date of filing: 07.01.2025
(51) Int. Cl.: B29C 64/118, B29C 64/209, B29C 64/227, B33Y 10/00, B33Y 30/00, D01D 5/00

(54) **SYSTEM AND METHOD FOR INTERRUPTING ELECTRO-WRITING OF A POLYMER MELT**

(71) Applicant: Technische Universität München, in Vertretung des Freistaats Bayern, 80333 München (DE)
(72) Inventor: Müller, Kilian, 85748 Garching (DE); Mela, Petra, 85748 Garching (DE); Dormann, Hannes, 85748 Garching (DE)
(74) Representative: Lucke, Andreas

(57) **Abstract**

A system for interrupting electro-writing of a polymer liquid from a print-head towards a main collector, the system comprising an auxiliary collector, different from the main collector, for receiving the polymer liquid on an auxiliary collection surface; and a displacement assembly configured to relatively displace the auxiliary collector and the print-head between a passive configuration, in which the print-head is arranged to deposit the polymer liquid on the main collector, and a reception configuration, in which the auxiliary collector intersects a deposition path from the print-head to the main collector; wherein, in the reception configuration of the displacement assembly, the auxiliary collector is continuously displaced relative to the print-head, such that the polymer liquid is deposited onto a continuously varying location on the auxiliary collection surface.

## Description

### FIELD OF THE DISCLOSURE

The present disclosure relates to a system and a method for electro-writing of a polymer liquid, such as a polymer solution or polymer melt. Specifically, the present disclosure relates to a system comprising an auxiliary collector and a displacement assembly for temporarily interrupting the deposition of the polymer liquid, as well as methods for controlling such systems.

### BACKGROUND

In the field of additive manufacturing, melt electro-writing (MEW) is a technique that has gained attention due to its ability to produce high-resolution microstructures. MEW involves the use of a high voltage potential to direct a polymer melt from a print-head onto a collector, forming a desired pattern or structure. The polymer melt is ejected from the print-head and is guided by the electric field towards the collector, with the polymer melt tapering towards the collector under the action of the electric field for forming a narrow polymer fiber on a substrate.

The printing process relies on an electrohydrodynamic equilibrium, where the balance between electrostatic forces and viscous forces in the polymer melt enables reliable and precise deposition. The print-head is moved continuously relative to the collector surface to maintain said equilibrium, resulting in continuous thin fibers of solidified polymer material, which are aligned in accordance with a direction of relative movement between the print-head and the collector. In contrast to electrospinning, in which a polymer liquid is spun onto a substrate resulting in substantially random deposition of polymer fibers, electro-writing uses a comparatively small spacing between the print-head and the collector for defining a controlled deposition path from the print-head towards the substrate and accordingly provides the ability of depositing well-defined shapes of polymer fibers.

Despite its potential, the electro-writing process is not without its challenges. One of the issues is the need to establish an electrohydrodynamic equilibrium, which can take several minutes of printing a sacrificial pattern before the system stabilizes. This initial phase is necessary to ensure that the polymer melt is consistently directed towards the collector, but it results in wasted material and time. Additionally, the continuous nature of the deposition process in electro-writing means that any interruptions or changes in the deposition path can lead to defects or artifacts in the printed structure.

[ooos]Another challenge in electro-writing is the precise control of the deposition path. The to-be-printed three-dimensional structure is typically defined using a computer-aided design (CAD) file, which is sliced into layers of deposited material, and translated into computer numerical command (CNC) language for controlling a machine tool, such as a relative movement sequence between a print-head and a substrate as well as extrusion commands. However, due to the continuous deposition mode used in electro-writing, the material traces need to be defined with dedicated software. This software must account for the continuous flow of the polymer melt and ensure that the deposition path does not cross regions that should remain free from material. Print artifacts, such as unwanted lines of deposited material, can occur if the deposition path is not accurately controlled, leading to the need for post-processing steps to trim these artifacts.

*Paxton et al. ("Design tools for patient specific and highly controlled melt electrowrit-ten scaffolds")* disclose design tools for electro-writing, such as customized software for converting 3D model data to g-code for electro-writing printers as well as post-processing options for fabricating complex anatomical designs.

### SUMMARY OF THE DISCLOSURE

Despite the substantial advances in the field of electro-writing, there remains a need for systems that can more effectively manage the deposition process to minimize print artifacts and ensure a consistent electrohydrodynamic equilibrium. Prior art systems generally introduce the need for extensive post-processing of printed structures to remove unwanted fibers, and the limit on continuous paths may also constrain the available geometries. It is therefore a technical problem underlying the present invention to provide a system for interrupting electro-writing of a polymer melt that at least partially overcomes the disadvantages of known systems. Moreover, broad adoption of the technique would require streamlined processes for generating deposition patterns and corresponding machine language translation, which can reliably print 3-dimensional objects from arbitrary 3D model definitions.

It is thus an object of the disclosure to provide a system and a method that overcome one or more of the disadvantages of known systems.

The present disclosure provides a system and methods for interrupting electro-writing processes as set out in the appended independent claims. Examples thereof are detailed in the dependent claims.

In a first aspect, a system for interrupting an electro-writing process of a polymer liquid from a print-head towards a main collector is provided. This system comprises an auxiliary collector, which is different from the main collector, for receiving the polymer liquid on an auxiliary collection surface. The system also comprises a displacement assembly configured to relatively displace the auxiliary collector and the print-head between two configurations: a passive configuration, in which the print-head is arranged to deposit the polymer liquid on the main collector, and a reception configuration, in which the auxiliary collector intersects a deposition path from the print-head to the main collector. In the reception configuration, the auxiliary collector is continuously displaced relative to the print-head, such that the polymer liquid is deposited onto a continuously varying location on the auxiliary collection surface.

The auxiliary collector intersecting the deposition path may intercept the stream of polymer liquid to deposit the polymer liquid onto the auxiliary collector. The system may therefore effectively interrupt and resume the polymer liquid deposition process without stopping the fiber jet by receiving the polymer liquid on the auxiliary collector. This capability increases the design flexibility for creating complex fiber architectures in electro-writing of a polymer based medium. While the polymer liquid is deposited onto the auxiliary collector, the system can substantially maintain an electrohydrodynamic equilibrium through displacement of the auxiliary collector with respect to the print-head, ensuring a stable fiber jet while allowing the main collector to be repositioned or the deposition process towards the main collector to be effectively paused.

The displacement assembly can involve translational movement, rotational movement, or a combination of both. For instance, the auxiliary collector can be moved linearly into the deposition path using a stepper motor and linear rails, or it can be rotated into position using a rotational actuator. The print-head itself can also be moved, either linearly or rotationally, to achieve the desired displacement relative to the auxiliary collector. Additionally, a translation assembly, which can be separate from the displacement assembly, can be used to move the main collector relative to the print-head to define the shape of the printed structure and to define a redeposition location, e.g. before the displacement assembly switches the auxiliary collector from the reception configuration into the passive configuration.

The skilled person will appreciate that in electro-writing a voltage potential for electro-writing between the main collector and the print-head (e.g. at its nozzle) will generally be applied to direct the polymer liquid towards the main collector. The polymer liquid may be any polymer based viscous medium, such as a polymer solution, a polymer melt, which is heated at the print head and deposited onto the main collector, or a hydrogel. The polymer liquid may solidify as it travels towards the main/auxiliary collector or after deposition thereon to form deposited polymer fibers. In some examples, the polymer based medium is (further) solidified through the application of radiation (e.g. UV radiation) after deposition onto the main collector.

Although the techniques disclosed herein will generally apply to any polymer based extruded liquid used in an electro-writing-process, the disclosure will in the following be described mainly with respect to an application in MEW, in which a polymer material is heated for obtaining a (liquid) polymer melt, which is deposited onto a substrate on a main collector.

MEW exploits the electrohydrodynamically driven transformation of an extruded polymer melt into a continuous microfiber jet that is drawn from the print head to a collector along a principal deposition direction, which is defined as the shortest distance between the nozzle of the print head and the main collector. In practice, the polymer liquid will tend to follow the direction of the electric field lines, which may deviate from the shortest distance, while the actual deposition path may curve in accordance with the relative movement of the collector and the print-head, e.g. due to inertia and/or pulling forces of deposited fiber sections, and external forces, such as gravity, which may generally lead to the stream of polymer melt (or other polymer liquids) following a curved deposition path.

The fiber jet can be formed by applying a high voltage potential to the print head while the collector is oppositely charged or electrically grounded. For example, a positive voltage may be applied to the nozzle of the print-head, and the main collector may be electrically grounded or negatively charged to generate a tapered stream of a polymer melt towards the main collector. Moreover, a substrate can be placed onto the main collector, i.e. between the print-head and the main collector, to receive the polymer melt in the passive configuration on the main collector.

Collecting the fiber at a translation speed that is close to or matches the travel speed of the fiber in the flight phase, i.e. the critical translation speed (CTS), can enable accurate direct writing of the polymer fiber according to predefined pathways and, consequently, fiber stacking to form 3D constructs following the layer-by-layer paradigm of additive manufacturing, via relative movement of the print-head and the main collector.

By maintaining a constant relative movement between the print-head and the main collector, the electrohydrodynamic equilibrium can be maintained, as the (charged) polymer melt streams towards the main collector (e.g. onto a substrate) without buildup of material and can be deposited as polymer fibers. Between the print-head and the main collector, the stream of polymer melt may generally follow a curved deposition path, which may curve away from the principal deposition direction towards an already deposited section of the polymer material on the main collector (i.e. with the bottom part of the stream of polymer liquid trailing behind the print-head, which is effectively moved relative to the main collector). As the stream of polymer melt travels towards the main collector and/or as the polymer melt is deposited on the main collector, the polymer melt cools down and solidifies to form polymer fibers on the main collector, substantially aligned along the translation direction between the main collector and the print-head.

The auxiliary collector may be electrically insulating, grounded, or charged, in order to maintain stable process conditions, when the displacement assembly switches the auxiliary collector from the reception configuration into the passive configuration, or vice versa.

The displacement assembly may drive the auxiliary collector into the deposition path of the polymer melt, wherein the auxiliary collector may be moved substantially perpendicularly with respect to the principal deposition direction into the deposition path, e.g. substantially 90° to the principal deposition direction, or along a curved path with the auxiliary collection surface at an angle of substantially 90° to the principal deposition direction (e.g. within 10° of 90°).

The auxiliary collector may be displaced into the stream of the polymer melt along a displacement direction, such that an angle between an edge of the auxiliary collector intersecting the stream of the polymer melt and the displacement direction is close to 90°, such as to avoid deflection of the stream of polymer melt and to promote a cutting of the stream of polymer melt travelling towards the main collector.

In some examples, the auxiliary collector comprises a cutting edge, wherein the cutting edge is oriented substantially perpendicular to a displacement vector of the auxiliary collector, as the auxiliary collector intersects the deposition path from the print-head to the main collector, and/or wherein an angle between the cutting edge and the displacement vector is greater than 45°, preferably greater than 60°, more preferably greater than 75°.

The cutting edge is for intersecting the stream of polymer melt travelling to the main collector during a transition of the auxiliary collector from the passive configuration to the reception configuration and/or from the reception configuration to the passive configuration. The cutting edge may be defined as a lateral edge of the auxiliary collector which intersects the stream of polymer melt as the polymer fiber deposition transitions from a deposition towards the main collector to a deposition onto the auxiliary collector. The orientation of the cutting edge may be beneficial in ensuring that the polymer melt is effectively intercepted and managed by the auxiliary collector. The orientation may be the tangential direction of the lateral boundary of the auxiliary collector at the intersection location of the auxiliary collector, in a top down view, e.g. along the principal deposition direction and/or along the normal of the auxiliary collection surface. The angle between the cutting edge and the displacement vector should be greater than 45 degrees, with a preference for angles greater than 60 degrees, and more preferably greater than 75 degrees or 80 degrees, i.e. within 10° of 90°. A substantially perpendicular angle may help in optimizing the interception and redirection of the polymer melt, potentially reducing the risk of deflections of the stream of polymer melt as it is intercepted.

In some examples, a cutting edge of the auxiliary collector is designed to be adjustable in orientation relative to the displacement vector. By allowing the angle to be modified, the system may achieve greater flexibility and efficiency in handling the polymer melt.

In some examples, the cutting edge of the auxiliary collector may be coupled to a heating element. This heating element could be used to modify the temperature of the polymer melt as it is intercepted, potentially improving the handling and deposition characteristics of the melt. By controlling the temperature at the point of interception, the system may achieve a more consistent and reliable cutting of the stream of polymer melt. For example, the heating element may be coupled to the auxiliary collector for controlling a temperature of the auxiliary collector and its cutting edge. In some examples, the heating element is arranged adjacent to the cutting edge, or the cutting edge is integrated with the heating element.

The auxiliary collector may be displaceable along different displacement directions, and may comprise two cutting edges each corresponding to one of the respective displacement directions. The displacement direction may be aligned with the translation directions of the main collector relative to the print-head, e.g. aligned with X- and Y-axes of a translation assembly for translating the main collector with respect to the print-head, or vice-versa. The X- and Y-axes of a translation assembly may be substantially perpendicular to each other and may each be substantially perpendicular to the principal deposition direction, such as to enable relative three axis movement of the print-head and the main collector. Relative Z-axis translation, i.e. relative vertical translation between the main collector and the print-head (and the auxiliary collector) substantially along the principal deposition direction, may be implemented by Z-axis movement of the print-head and/or the main collector, e.g. by mounting the print-head (e.g. together with the auxiliary collector) and/or the main collector on a z-axis translation assembly. The system may be configured to intercept the stream of polymer melt according at a selected one of the cutting edges, based on a corresponding displacement path of the auxiliary collector intercepting the stream of polymer melt. In a further example, multiple cutting edges, such as three or four cutting edges may be provided.

In some examples, a displacement vector of the auxiliary collector is synchronized with a translation direction of the main collector with respect to the print-head, as the auxiliary collector intercepts the stream of the polymer liquid.

The deposition path of the polymer liquid, as it travels towards the main collector, generally curves in accordance with a translation direction of the main collector with respect to the print-head, and the cutting edge may be at a substantially right angle to the translation direction, e.g. within 45°, 30°, 20° or 10° of 90°, such as to prevent a deflection of a trailing portion of a stream of polymer melt hanging above the substrate/main collector and below the auxiliary collector, as the auxiliary collector intersects the deposition path of the polymer melt. Accordingly, the displacement vector of the auxiliary collector may be substantially parallel to the translation direction.

In some examples, a displacement vector of the auxiliary collector, as the auxiliary collector intersects the deposition path from the print-head to the main collector, is aligned with a principal axis of a translation assembly for relative movement between the print-head and the main collector.

The displacement vector may be aligned with the principal axis of the translation assembly through the use of control algorithms, which may adjust the position and movement of the auxiliary collector to generate the desired alignment, e.g. based on the translation direction defined in the computer numerical control file preceding the interruption of the deposition. The displacement vector of the auxiliary collector may be the direction of displacement of the cutting edge, as the cutting edge intersects the deposition path from the print-head to the main collector.

In some examples, the numerical control sequence is adjusted, such that the translation direction between the print-head and the collector is aligned with the displacement direction of the auxiliary collector before an interruption of the deposition towards the main collector.

In some examples, the auxiliary collector is rotatably mounted to the displacement assembly, and the displacement assembly is configured to rotate the auxiliary collector for continuously displacing the auxiliary collector relative to the print-head.

The rotation may allow for the continuous displacement of the auxiliary collector relative to the print-head, ensuring that the polymer melt is deposited onto a continuously varying location on the auxiliary collection surface, with an effective displacement speed of the auxiliary collection surface of the auxiliary collector with respect to the print-head based on the radius and rotation speed of the auxiliary collector. The rotation mechanism may provide a more controlled and consistent movement of the auxiliary collector, potentially improving the precision and uniformity of the polymer melt deposition. With a constant speed of rotation, the effective displacement speed of the auxiliary collection surface receiving the polymer liquid may be substantially constant in the reception configuration.

Rotating the auxiliary collector may also facilitate the removal of any excess polymer melt, e.g. by positioning a cleaning device over the auxiliary collection surface, which may be selectively positioned over the auxiliary collection surface, ensuring that the surface remains clean and ready for subsequent deposition cycles.

The auxiliary collector may comprise a cutting edge and may be positioned such that a displacement direction of the cutting edge is substantially perpendicular to the translation direction when the auxiliary collector is displaced and/or rotated to intersect the deposition path.

In some examples, the auxiliary collector may be linearly translated in addition to or instead of being rotatably mounted. The displacement assembly could be configured to move the auxiliary collector along a linear path, intersecting the deposition path from the print-head to the main collector in parallel with a current translation direction between the main collector and the print-head. A linear movement may additionally be employed for depositing the polymer melt onto a continuously varying location on the auxiliary collection surface.

In some examples, the displacement assembly is configured to linearly displace the auxiliary collector from the passive configuration into the reception configuration, and vice versa.

A linear motion may ensure that the auxiliary collector intersects the deposition path in a consistent and predictable manner, which could improve the overall quality and uniformity of the polymer melt deposition on the main collector, which is interrupted by the insertion of the auxiliary collector. The system may comprise a linear displacement (sub-)assembly mounting the auxiliary collector and configured to displace the auxiliary collector along a linear path. A displacement axis (or axes) of the linear displacement (sub-)assembly may be parallel to a translation direction of a translation assembly for relatively displacing the main collector and the print-head. In some examples, the linear displacement (sub-)assembly may be a multiple (e.g.) two-axis displacement assembly for displacing a position of the auxiliary collector in a displacement plane, which may be substantially perpendicular to the principal deposition direction.

The linear displacement may be combined with rotational movement of the auxiliary collector in order to define two different (e.g. substantially perpendicular) displacement directions for intersecting the deposition path of the polymer melt. In some examples, the auxiliary collector is linearly displaced for intersecting the deposition path, e.g. as part of switching the auxiliary collector from the passive configuration into the reception configuration, and is rotated for continuously changing a deposition location of the polymer melt on the auxiliary collection surface.

In some examples, a speed of the auxiliary collector for intersecting the deposition path is different from, and in particular higher than, a speed of the auxiliary collector when in the reception configuration. For example, a speed of displacing the auxiliary collector linearly may be different from an effective speed of the auxiliary collection surface rotating below the print-head in the reception configuration. An increased interception speed may promote a cutting action of the stream of polymer melt and may reduce a deposition error on the main collector.

In some examples, the displacement assembly may be configured to linearly and rotationally displace the auxiliary collector from the passive configuration into the reception configuration, and vice versa, at the same time or in succession.

In some examples, a cutting edge of the auxiliary collector comprises a wedged cross-section, wherein an angle between a lateral face of the cutting edge and the auxiliary collection surface is smaller than 90° for intersecting the deposition path of the polymer liquid.

The wedged cross-section of the cutting edge may facilitate a more precise interruption of a polymer liquid stream, e.g. of a polymer melt, potentially improving the accuracy of the deposition process. The angle being smaller than 90 degrees may enhance the ability of the cutting edge to intersect the deposition path effectively, ensuring that the polymer melt is redirected onto the auxiliary collection surface without causing disruptions or inconsistencies in the deposition process, e.g. by reducing a chance of fibers of elongated polymer melt sticking to a lateral face of the auxiliary collector after the cutting edge has intersected the deposition path.

In some examples, the system further comprises a cutter, configured to intersect the deposition path to cut the stream of the polymer liquid.

The cutter may be configured to cut the polymer stream at a desired time, before or as the auxiliary collector intersects the deposition path, potentially improving the accuracy and quality of the electro-writing process.

The cutter may be implemented as a cutting wire configured to intersect a stream of polymer melt, as the auxiliary collector is displaced from the passive configuration into the reception configuration. In some examples, the system may comprise a heating element associated with the cutter to ensure that the polymer melt remains in a fluid state during the cutting process. This heating element may be controlled to maintain an optimal temperature, thereby preventing the polymer from solidifying prematurely and ensuring a clean cut.

In some examples, the cutter is mounted on the auxiliary collector above or below the auxiliary collection surface.

The cutter's placement on the auxiliary collector may result in improved accuracy and consistency in the deposition process, as the cutter can trim or sever the polymer melt at specific points. The communication between the cutter and the auxiliary collector may be inherently mechanical, with the cutter being physically connected or attached to the auxiliary collector and positioned to engage the polymer melt as it is deposited. This mechanical interaction may provide a straightforward and reliable means of controlling the deposition process. For example, the cutter may be mounted onto posts on the auxiliary collector, such as to move together with the auxiliary collector, as the auxiliary collector is displaced.

In some examples, the cutter can be adjusted or repositioned as needed. The cutter may be designed to move in synchronization with the auxiliary collector, to interact with the polymer melt during the intersection process, or to render it ineffective as the auxiliary collector is transitioned back into the passive configuration.

In some examples, the cutter is configured to move in a different direction than the auxiliary collector, when the auxiliary collector is displaced to intersect the deposition path from the print-head to the main collector.

An independent movement of the cutter may provide a scissor-like cutting functionality. Alternatively, the cutter may move in substantially the same direction as the auxiliary collector.

In some examples, the auxiliary collector is electrically conductive, and in particular made from a metal.

The electrically conductive nature of the auxiliary collector may facilitate the dissipation of any static charges that could accumulate during the deposition process, thereby potentially improving the stability and consistency of polymer melt deposition. Moreover, an electrically conductive auxiliary collector may enable greater control of the potential between the auxiliary collector and the print-head, such as to minimize a disruption of the electrohydrodynamic equilibrium of the stream of polymer melt. For example, the auxiliary collector may be charged, e.g. with the same polarity as the print-head or with a smaller potential than the main collector, such as to reduce a disruption of the electric field lines due to the presence of the auxiliary collector between the main collector and the print-head and/or to prevent arcing.

In some examples, the auxiliary collector may be designed with a surface coating that enhances its electrical conductivity without being entirely made of metal. This could involve using a base material, with an electrically conductive coating applied to the surface that interacts with the polymer melt. Such a configuration may offer a balance between the mechanical properties of the base material and the electrically conductive properties of the coating.

In other examples, the auxiliary collector may incorporate a grid or mesh structure made from electrically conductive materials, rather than being a solid metal surface. This grid or mesh structure may provide sufficient electrical conductivity to remove static charges.

Alternatively, the auxiliary collector may be dielectric or weakly electrically conducting, such as to reduce an effect of electric field disruption due to the insertion of the auxiliary collector in between the main collector and the print-head.

In some examples, the system is configured to change a displacement direction of the auxiliary collector before the auxiliary collector is displaced from the reception configuration into the passive configuration.

The auxiliary collector may change its direction of movement prior to being repositioned. The change in displacement direction may promote a clean resumption of the deposition process, potentially preventing any undesired tearing of the polymer fibers from the auxiliary collection surface, and maintaining electrohydrodynamic equilibrium. Specifically, the displacement direction may be changed at a position in time, such that an intended resumption time of the deposition of the polymer liquid onto the main collector temporally coincides with the position of the print-head approaching the edge of the auxiliary collector.

The print-head approaching the edge of the auxiliary collector can be understood as the projected print-head position along the principal deposition direction on the auxiliary collection surface being at a distance from the edge of the auxiliary collector, which is smaller than the distance between the print-head and the auxiliary collection surface.

Preferably, a path of the print-head over the auxiliary collection surface towards the edge of the auxiliary collector may be at least equal to a travel distance for stabilizing a deposition onto the auxiliary collector, e.g. with the deposition path assuming a stable shape with a trailing edge curving away from the principal deposition direction along the displacement direction.

In some examples, the system may be configured to adjust the speed of the auxiliary collector's movement as it is displaced from the reception configuration to the passive configuration, and vice-versa.

In some examples, the system is configured to delay a resumption of a deposition process on the main collector in accordance with a retraction delay for displacing the auxiliary collector from the reception configuration into the passive configuration until deposition of the polymer liquid towards the main collector is resumed.

In some examples, a relative displacement speed between the auxiliary collector and the print-head is at least 50% of a critical translation speed for the polymer liquid, in particular at least 90% or 100% of the critical translation speed for the polymer liquid.

A sufficient displacement speed may ensure that the polymer liquid, in particular a polymer melt, is deposited onto the auxiliary collection surface in a controlled manner for maintaining the electrohydrodynamic equilibrium, preventing any potential issues that may arise from slower or inconsistent deposition speeds. For example, the auxiliary collector may be displaced continuously at a displacement speed around the critical translation speed, e.g. at between 100% and 110% of the critical translation speed, of a polymer melt for depositing continuous polymer fibers on the auxiliary collector in accordance with a deposition of the polymer melt onto the main collector. In some examples, the displacement speed of the auxiliary collector with respect to the print-head is substantially equal to an effective translation speed between the main collector and the print-head, e.g. with 20% or 10% of each other.

In some examples, when the auxiliary collector is displaced between the passive configuration and the reception configuration, the displacement assembly is configured to displace the auxiliary collector according to an insertion phase, in which the auxiliary collector is displaced into the deposition path of the polymer liquid towards the main collector, a collection phase, in which the auxiliary collector is continuously displaced at a displacement speed with respect to the print-head, and a retraction phase, in which the auxiliary collector is displaced out of the deposition path of the polymer liquid towards the main collector.

In some examples, the displacement speed of the auxiliary collector in the reception configuration is substantially equal to a critical translation speed of the polymer liquid, in particular within 30% or 20% of the critical translation speed of the polymer liquid and/or at least equal to the critical translation speed of the polymer liquid.

The system may be configured such that the displacement speed is approximately equal to the translation speed between the print-head and the main collector. This configuration may ensure that the polymer liquid is deposited in a manner that maintains the integrity and consistency of the deposition process.

In some examples, the displacement speed may be set to at least match a minimum effective translation speed of the polymer liquid. This minimum effective translation speed may be the lowest speed at which the polymer liquid can be deposited without compromising the electrodynamic equilibrium. Setting the displacement speed to at least this minimum effective value may ensure that the polymer liquid is deposited smoothly and evenly.

In some examples, an insertion speed of relative displacement between the print-head and the auxiliary collector during the insertion phase is at least equal to the critical translation speed of the polymer liquid. In some examples, a retraction speed of relative displacement between the print-head and the auxiliary collector during the retraction phase is at least equal to the critical translation speed of the polymer liquid. In some examples, the insertion speed and/or the retraction speed are/is greater than the displacement speed in the collection phase.

The insertion speed being at least equal to the critical translation speed of the polymer liquid may enable that the polymer liquid is effectively intercepted and collected by the auxiliary collector. Similarly, the retraction speed during the retraction phase may be designed to meet or exceed the minimum required translation speed of the polymer liquid, ensuring a smooth transition back to the main collection surface. Additionally, the system may be configured such that the insertion and/or retraction speed(s) are/is greater than the displacement speed during the collection phase, promoting a more abrupt stop of the deposition of the polymer liquid onto the main collector or onto the auxiliary collector, respectively. For example, the insertion and/or retraction speed(s) may be greater than the displacement speed during the collection phase and smaller than ten times or five times, such as smaller than three (e.g. two) times the displacement speed during the collection phase. The displacement speed of the auxiliary collector with respect to the print-head may abruptly or smoothly transition between the displacement speed during the collection phase and the insertion/retraction speed.

In some examples, a direction of relative displacement between the print-head and the auxiliary collector reverses in the collection phase, in particular in the middle of the collection phase.

Said reversal of the direction of relative displacement during the collection phase may ensure that a polymer melt is consistently deposited in a controlled manner, with the stream of polymer melt travelling towards the edge of the auxiliary collector at a controlled displacement speed. Moreover, the reversal of the displacement vector may ensure that the relative position between the print-head and the auxiliary collector is at or close to a transition point, where the auxiliary collector no longer intersects the deposition path onto the main collector, at the start of the retraction phase.

In some examples, the system may comprise a control unit configured to manage the timing and the extent of the direction reversal during the collection phase. This control unit may be programmed to reverse the direction of displacement at predetermined intervals.

In alternative examples, the direction of relative displacement between the print-head and the auxiliary collector may remain constant, e.g. when the auxiliary collector rotates in the collection phase, and the stream of polymer melt may transition from a deposition onto the auxiliary collection surface to a deposition onto the main collector at a different edge of the auxiliary collector than a cutting edge at which the auxiliary collector intersected the deposition path of the polymer melt in the insertion phase.

In some examples, the system may select a displacement direction of relative displacement between the print-head and the auxiliary collector in the retraction phase based on a translation direction between the print-head and the main collector after the deposition towards the main collector is resumed.

In some examples, the system is configured to displace the auxiliary collector into the reception configuration in response to an interruption command for interrupting a deposition of the polymer liquid onto the main collector.

The system may comprise a control unit or a similar component capable of issuing interruption commands. The communication between the control unit and the displacement assembly may involve electronic signals that trigger the displacement of the auxiliary collector, e.g. through driving an electric actuator. The interruption command may be part of a computer numerical control sequence for controlling the printing of an object with an electro-writing system.

In some examples, the system is configured to receive a computer numerical control sequence for depositing an extruded material on a substrate with a print-head according to a deposition pattern comprising an interruption sequence, for interrupting deposition of the extruded material, and wherein the system is configured to generate an auxiliary collector insertion command to displace the auxiliary collector from the passive configuration into the reception configuration, wherein the displacement of the auxiliary collector is scheduled before the occurrence of the interruption sequence according to an insertion delay for displacing the auxiliary collector from the passive configuration until the auxiliary collector intersects the deposition path.

The displacement of the auxiliary collector is scheduled to occur before the interruption sequence, taking into account an insertion delay that takes into account a lag from the start of the movement to a point at which the auxiliary collector intersects the deposition path, such that the deposition onto the main collector is interrupted at a time coinciding with the intended interruption of the deposition, optionally taking into account a deposition of a trailing part of the polymer liquid in flight below the auxiliary collector at the time of the intersection.

The control unit may calculate the necessary insertion delay based on the speed and trajectory of the auxiliary collector's and the main collector's movement, ensuring that it intersects the deposition path at the correct moment.

In some examples, the system is configured to receive a computer numerical control sequence for depositing an extruded material on a substrate with a print-head according to deposition pattern comprising a resumption sequence, for resuming deposition of the extruded material towards the main collector, and wherein the system is configured to generate an auxiliary collector retraction command to displace the auxiliary collector from the reception configuration into the passive configuration, wherein the displacement of the auxiliary collector is scheduled before the occurrence of the resumption sequence according to a retraction delay for displacing the auxiliary collector out from the reception configuration until the auxiliary collector no longer intersects the deposition path.

In some examples, the insertion delay and/or the retraction delay are/is based on a current translation direction between the main collector and the print-head, when the interruption command occurs.

For example, the delay may be different based on whether the auxiliary collector intersects a concave or convex side of the deposition path from the print-head onto the main collector. In some examples, the insertion delay may be determined by a combination of factors, including the current translation direction and the speed of the polymer liquid flow.

In some examples, the system is configured to adjust a voltage applied between the print-head and the main collector and/or between the print-head and the auxiliary collector, when the auxiliary collector is displaced from the passive configuration towards the reception configuration, and vice-versa.

The voltage applied between the print-head and the main collector and/or between the print-head and the auxiliary collector may be adjusted to reduce a disruption of the electrohydrodynamic equilibrium by the insertion of the auxiliary collector into the gap between the main collector and the print-head. For example, for an electrically conductive auxiliary collector and a grounded main collector, a voltage applied to the print-head may be reduced (increased) when the auxiliary collector is displaced from the passive configuration towards the reception configuration (or vice-versa), to maintain substantially the same electric field strength acting on the stream of polymer melt in the reception configuration and the passive configuration.

In some examples, the system is configured to adjust a vertical position of the auxiliary collector between the print-head and the main collector in accordance with a build height of a deposited polymer material above the main collector.

The vertical position may be a position along the principal deposition direction between the main collector and the print-head, and the position of the auxiliary collector may be adjusted, to prevent interference of the auxiliary collector and the deposited polymer material, as the build height increases. In some examples, the system may be configured to maintain a constant spacing between the print-head and the auxiliary collector, as the build height of the deposited material above the main collector increases, effectively increasing a distance between the auxiliary collector and the main collector. For example, the displacement assembly may be mounted to the print-head or to a common frame with the print-head, such as to maintain a constant spacing between the print-head and the auxiliary collector in the reception configuration, e.g. independent from a vertical spacing between the print-head and the main collector along the principal deposition direction. Alternatively, the displacement assembly may comprise a vertical displacement subassembly for adjusting the vertical position of the auxiliary collector. For example, a processing system may send a vertical adjustment command to an electric actuator of the vertical displacement subassembly to displace the auxiliary collector along the principal deposition direction in accordance with the build height of the deposited polymer material, e.g. when a layer of polymer material has been deposited.

As a vertical spacing between the print-head and the main collector increases to accommodate an increasing build height, the voltage applied between the print-head and the auxiliary collector in the reception phase may be adjusted, e.g. by adjusting the electrical potential applied to the print-head and/or the auxiliary collector based on the build height.

According to a second aspect, the disclosure relates to an electro-writing system that comprises a system according to the first aspect, wherein the electro-writing system further comprises the print-head and the main collector. The system may also include a voltage source configured to apply an electric potential between the print-head and the main collector. The electric potential creates an electric field that drives the polymer liquid from the print-head to the main collector. Preferably, the electric potential is applied to the print-head.

The print-head is responsible for extruding the polymer liquid, while the main collector serves as the surface on which the polymer liquid is deposited. The print-head can be implemented using different nozzles or extrusion mechanisms to control the flow of the polymer liquid using a suitable feeding mechanism and may comprise a heating element for heating a polymer material for depositing a polymer melt as the polymer liquid in a MEW system. The main collector can also be designed in different forms, such as a flat surface or a rotating drum, to accommodate various deposition patterns. However, the skilled person will appreciate that arbitrarily-shaped non-planar collector geometries are possible, e.g. an anatomically relevant geometry, which may feature a varying shape on which a polymer liquid can be deposited, as reported by Terranova et al. ("*A versatile 5-axis melt electrowriting platform for unprecedented design freedom of 3D fibrous scaffolds"*).

Displacement assemblies can be implemented using combinations of translational and rotational mechanisms to control the insertion of the auxiliary collector into the stream of polymer liquid. For example, a translational displacement assembly could use linear actuators to move the auxiliary collector in and out of the path of the polymer liquid. A rotational displacement assembly could use motors and gears to rotate the auxiliary collector into position. Additionally, a combination of both translational and rotational displacement assemblies could be used to provide more precise control over the positioning of the auxiliary collector. The auxiliary collector may be mounted to the print-head or may be mounted onto a printer frame, which may also mount a translation assembly for translating the print-head and/or the main collector.

In some examples, the main collector facing the print-head for receiving the polymer liquid is electrically grounded.

In other examples, the main collector is connected to a different voltage polarity than the print-head. In some examples, a potential is applied to the auxiliary collector, which may be a ground potential or a voltage potential which is equal to the voltage potential of the main collector or between the voltage potential of the print-head and the main collector.

In some examples, a distance between the main collector and the print-head is smaller than 10 mm, in particular smaller than 8 mm, when electro-writing with a polymer melt onto the collector.

The distance between the auxiliary collector and the print-head will generally be smaller than a distance between the main collector and the print-head. For example, the distance between the auxiliary collector and the print-head in the reception configuration may be greater than 40% of the distance between the print-head and the main collector, such as between 40% and 80% of the distance between the print-head and the main collector.

The distance maybe defined along the principal deposition direction of the print-head and the main collector, and may be measured from respective collection surfaces of the main collector and the auxiliary collector.

In some examples, the system may be configured such that the distance between the main collector and the print-head is adjustable, e.g. for optimizing the electro-writing conditions during the printing of a three-dimensional structure. In some examples, the system may comprise a mechanism for dynamically controlling the distance between the main collector and the print-head during the electro-writing process. In some examples, the distance between the main collector and the print-head is adjusted (e.g. increased) as the auxiliary collector is displaced to intersect the deposition path from the print-head to the collector, and/or as the auxiliary collector is displaced to retract from the deposition path from the print-head to the collector (e.g. reduced), to promote maintenance of the electrohydrodynamic equilibrium of the polymer liquid travelling from the print-head towards the main collector.

According to a third aspect of the disclosure, a method for electro-writing of a polymer liquid is provided. The method comprises ejecting a polymer liquid from a print-head towards a main collector along a deposition path; displacing an auxiliary collector, different from the main collector, into a reception configuration, in which the auxiliary collector intersects the deposition path from the print-head to the main collector; continuously displacing the auxiliary collector relative to the print-head, such that the polymer liquid is deposited onto a continuously varying location on the auxiliary collector; and retracting the auxiliary collector for resuming a deposition of the polymer liquid towards the main collector.

The method may involve electro-writing of a polymer melt, which is a process where a polymer melt is ejected from a print-head towards a main collector along a specified path while a voltage potential between the print-head and the main collector is applied, which will generally result in a deposition of polymer fibers onto the main collector, e.g. onto a substrate arranged above/over the main collector. When polymer fiber deposition onto the main collector is supposed to be interrupted, the auxiliary collector is displaced into the reception configuration, intersecting the deposition path from the print-head to the main collector. While in the reception configuration, the auxiliary collector may be continuously displaced relative to the print-head, ensuring that the polymer melt is deposited onto various locations of the auxiliary collector. Subsequently, the auxiliary collector is retracted to resume deposition of the polymer melt towards the main collector. The retraction may retract the auxiliary collector from the deposition path of the polymer melt onto the main collector, and the deposition towards the main collector may resume once the auxiliary collector no longer interferes with the stream of polymer melt. The method can enable discontinuous fiber deposition in MEW, which increases the design flexibility of fiber architectures.

According to a fourth aspect of the disclosure a computer implemented method for an electro-writing system comprising an auxiliary collection surface configured to be displaced to intersect a deposition path from a print-head to a main collector is provided. The method comprises receiving a computer numerical control sequence for depositing an extruded material on the main collector with a print-head, identifying an interruption command in the computer numerical control sequence, the interruption command indicating an interruption of the extrusion process, and generating an auxiliary collector intersection command complementing the computer numerical control sequence. The auxiliary collector intersection command is executed before the interruption command according to an intersection delay for intersecting the collection path from the print-head to the main collector from a passive configuration of the auxiliary collector. The method further comprises identifying a resumption command in the computer numerical control sequence, the resumption command indicating a resumption of the extrusion process, and generating an auxiliary collector retraction command complementing the computer numerical control sequence. The auxiliary collector retraction command is executed before the resumption command according to a resumption delay for displacing the auxiliary collector out from a reception configuration, in which the auxiliary collector intersects the deposition path from the print-head to the main collector, until deposition from the print-head onto the main collector resumes.

The computer numerical control sequence may be generated by a slicing software from a 3D model definition of a to-be-printed object, which may generate machine instructions for depositing lines of extruded material, e.g. with an extrusion based printer, such as a fused deposition modelling (FDM) printer. Corresponding software will generally section a slice of the 3D model into multiple continuous sections of extruded material, and generate commands for relative print-head and substrate movement as well as commands starting and stopping extrusion from the print-head. An interruption command sequence between different continuous sections of extruded material may comprise a stop extrusion command and a print-head retraction command followed by relative movement of the print-head and the substrate, before the print-head is approached back towards the substrate, and extrusion is resumed.

The method identifies corresponding command sequences based on interruption command(s) indicative of a transition between continuous sections of extruded material (in which the extrusion is generally supposed to be stopped), and inserts triggers for inserting the auxiliary collector into the deposition path of the print-head before the occurrence of the interruption, such that the insertion of the auxiliary collector is synchronized with the intended stop of the extrusion. The insertion delay of the auxiliary collector may be determined empirically, e.g. measured, and may depend on the current translation direction between the print-head and the main collector, e.g. whether the auxiliary collector approaches a concave or convex side of the stream of a polymer melt. In some examples, the method selects an insertion delay based on the current translation direction between the print-head and the main collector. In some examples, the method selects a retraction delay based on the upcoming translation direction between the print-head and the main collector.

In some examples, the method comprises inserting a delay in the computer numerical control sequence in accordance with a travel time of the print-head over the auxiliary collector.

The delay may ensure that the auxiliary collector is properly positioned to retract from the deposition path at the correct moment without extensive movement of the print-head over the auxiliary collector. In some examples, the delay is inserted when a time for repositioning the relative arrangement between the print-head and the main collector is smaller than a minimum time required for stabilizing the flow of the polymer melt onto the auxiliary collector, or smaller than a minimum time required for approaching an edge of the auxiliary collector after the deposition path has been intersected.

In some examples, the method may further comprise deleting a retraction command for the print-head associated with the interruption command.

The method may further involve the deletion of all retraction commands, which may streamline the computer numerical control sequence by removing unnecessary commands that may otherwise interfere with the electro-writing process. The step may enable compatibility of the method with FDM based slicing software as well as with corresponding control hardware. Specifically, by removing retraction commands, which may indicate an extraction of the print-head away from the substrate, the method may use command sequences generated by FDM software while at the same time avoiding erroneous print-head movement, when FDM control hardware is repurposed for an electro-writing printer. The removal of the retraction commands feature may thus contribute to reducing the likelihood of errors or delays that could arise from the presence of redundant commands within the sequence.

In some examples, the method may further comprise a verification step where the modified computer numerical control sequence, with all extraction commands deleted, is reviewed to ensure that no retraction commands are present for the print-head and/or no essential commands have been inadvertently removed. This verification step may involve a software-based validation process, providing an additional safeguard to maintain the integrity and functionality of the sequence.

In some examples, the method further comprises deleting a push-forward command for the print-head associated with the resumption command.

Specifically, by removing push-forward commands for the print-head, which may indicate a re-approach of the print-head towards the substrate as a resumption command, the method may further improve compliance with command sequences generated by FDM software while at the same time avoiding erroneous print-head movement, when FDM control hardware is repurposed for an electro-writing printer. By removing the push-forward command, the system may ensure that the print-head remains stationary in electro-writing applications.

In some examples, the method further comprises deleting all extrusion commands associated with an interruption of polymer liquid deposition towards the main collector.

The removal of extrusion commands associated with an interruption of polymer liquid deposition, e.g. stop extrusion and start extrusion commands associated with a retraction command and a push-forward command, respectively, may further reduce the likelihood of error, if an electro-writing method is used with hardware developed for FDM printers, as electro-writing methods generally require constant extrusion of a polymer liquid.

In some examples, the method further comprises receiving a shape definition for a to-be-printed object.

The method may receive a shape definition for a to-be-printed object and may generate the computer numerical control sequence based on this shape definition, such that the extruded material is deposited in a manner that reflects the desired shape of the final object. The method may involve the transmission of a shape definition to a processing system, which then processes this information to create a corresponding computer numerical control sequence. The computer numerical control sequence dictates the movements and operations of the print-head and the auxiliary collector, ensuring that the deposition path and any interruptions or resumptions in the extrusion process are managed in accordance with the shape definition.

In some examples, the method may comprise receiving a design file for the to-be-printed object and converting this design file into a computer numerical control sequence. The method may be applicable to different types of design files, such as CAD files or other digital representations of the object, which are then processed by the system to generate the appropriate control sequence.

According to another aspect, the disclosure relates to a computer program that comprises machine-readable instructions. When executed by a processing system, these instructions cause the processing system to carry out a method as described in the third and/or fourth aspect and/or to implement and/or control a system according to the first and/or second aspect.

A computer program refers to a set of instructions that a computer can execute to perform specific tasks. Machine-readable instructions are the coded commands that a computer's processor can interpret and act upon. A processing system may comprise a processing unit which is the part of the computer that performs the instructions of the computer program, typically a central processing unit (CPU) or a microcontroller.

The computer program may enable the processing unit to execute specific methods or to control systems related to the described electro-writing system. This includes managing the deposition of polymer melts to create discontinuous fiber patterns, which may enhance the design flexibility of fiber architectures in MEW.

The skilled person will appreciate that the system for interrupting the stream of polymer liquid onto the main collector using the auxiliary collector may be provided together with or independently from an electro-writing system, e.g. as a modular part, which may be mounted on the print-head and/or a frame mounting a translation assembly for translating the main collector with respect to the print-head.

The method of the third and fourth aspect may use or be compatible with the systems of the first and second aspect, such that any of the previous examples are generally compatible with each other.

### LIST OF FIGURES

In the following, a detailed description of the present disclosure and examples thereof is given with reference to the figures. The figures show:
Figure 1A: an example of an electro-writing system for electro-writing of a polymer melt from a print-head onto a main collector in a side view, with an auxiliary collector for interrupting the deposition of polymer melt onto the main collector in a passive configuration.
Figure 1B: an example of an electro-writing system for electro-writing of a polymer melt from a print-head onto a main collector in a side view, with the auxiliary collector in a reception configuration.
Figure 2: a schematic flowchart of a method for electro-writing of a polymer melt according to an example.
Figure 3A: another example of an electro-writing system for electro-writing of a polymer melt from a print-head onto a main collector, with an auxiliary collector for interrupting the deposition of polymer melt onto the main collector in an isometric view.
Fig. 3B: a schematic top view of the auxiliary collector intersecting a deposition path of the polymer melt on the main collector in accordance with the example of Fig. 3A.
Figure 4: a side view of the electro-writing system of Fig. 3A with a print-head, main collector, and auxiliary collector.
Figure 5: an example of a sub-displacement assembly of a melt electro-writing interruption system with an auxiliary collector and associated components for rotating the auxiliary collector in an isometric view.
Figure 6: an example of another sub-displacement assembly of a melt electro-writing interruption system including a rail slide mechanism and a mounting bracket in an isometric view.
Figure 7: a schematic flowchart of a method for controlling an electro-writing system based on a computer numerical control sequence according to an example.
Figure 8A: a schematic view of a "concave in" configuration of the auxiliary collector interrupting a stream of polymer melt with a graph depicting offset versus AC translational speed according to an example.
Figure 8B: a schematic view of a "convex in" configuration of the auxiliary collector interrupting a stream of polymer melt with a graph depicting offset versus AC translational speed according to an example.
Figure 8C: a schematic view of a "concave out" configuration of the auxiliary collector retracting from the deposition path from the print-head to the main collector with a graph depicting offset versus AC translational speed according to an example.
Figure 8D: a schematic view of a "convex out" configuration of the auxiliary collector retracting from the deposition path from the print-head to the main collector with a graph depicting offset versus AC translational speed according to an example.
Figure 9A: an example of a complex 3D structure with internal lattice and external contours fabricated using a conventional control sequence.
Figure 9B: an example of a similar 3D structure with internal lattice and external contours fabricated with the use of temporary interruptions by an auxiliary collector.

### DESCRIPTION OF EXAMPLES

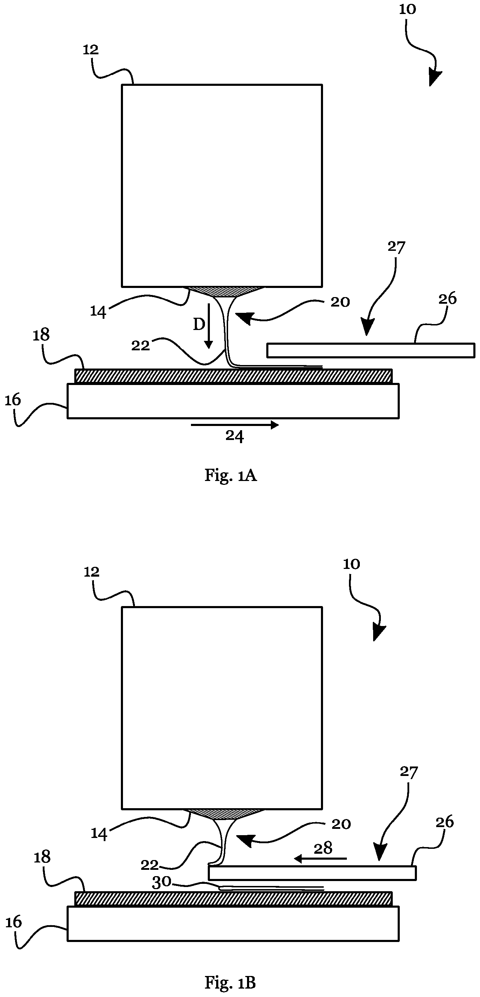

Figure 1A shows an electro-writing system 10, with a print-head 12 comprising a nozzle 14 arranged above a main collector 16 with a substrate 18 placed onto the main collector 16. An electric potential can be applied between the nozzle 14 and the main collector 16, for charging a polymer melt ejected from the nozzle 14 and for directing the polymer melt towards the main collector 16 onto the substrate 18. As illustrated in Fig. 1A, the polymer melt may taper under the influence of the electric field from an ejection location at the nozzle 14, with the conical tapering shape generally being referred to as a Taylor cone 20, towards a fiber shape along a principal deposition direction D, which is aligned along a shortest distance between the nozzle 14 and the main collector 16. As shown in Fig. 1A, a resulting deposition path of the polymer melt towards the main collector 16 may curve in accordance with a translation direction 24 of relative movement between the print-head 12 and the main collector 16, with a deposited fiber trailing behind the stream of polymer melt 22 and pulling the stream of polymer melt 22 into a curved shape. The translation direction 24 of the main collector 16 relative to the print-head 12 is substantially perpendicular to the principal deposition direction D, and the stream of polymer melt 22 may solidify at or close to the substrate 18 for depositing polymer fibers onto the substrate 18 on the main collector 16.

The translation speed of the main collector 16 with respect to the print-head 12 should be at or close to the critical translation speed (CTS) of the polymer melt i.e. the speed at which the stream of polymer melt 22 travels towards the main collector 16 in an electrohydrodynamic equilibrium, generally between 100% and 110% of the CTS, for depositing polymer fibers onto the substrate 18, which are aligned along a translation path of the main collector 16 with respect to the print-head 12. The skilled person will appreciate that the main collector 16 may generally be translated with respect to the print-head 12 along two independent directions, e.g. in a plane of translation perpendicular to the principal deposition direction D, or may be mounted on a drum, for defining two-dimensional deposition patterns of the polymer melt on the substrate 18. In addition, a distance of the print-head 12 and the main collector 16 along the principal deposition direction D may be adjusted in accordance with a height of a deposited pattern of polymer fibers.

In the illustrated example, the main collector 16 is positioned beneath the print-head 12 and is configured to receive the polymer melt 22 on a top surface of the substrate 18. An auxiliary collector 26, which is different from the main collector 16, is arranged adjacent to the main collector 16 but not intersecting the deposition path of the stream of polymer melt 22, corresponding to a passive configuration of the auxiliary collector 26. The auxiliary collector 26 is arranged at a vertical position between the main collector 16 and the print-head 12 along the principal deposition direction D, but is shifted laterally (horizontally) from the nozzle 14 with respect to the stream of polymer melt 22 and/or the principal deposition direction D. The auxiliary collector 26 features an auxiliary collection surface 27 and is capable of being displaced by a displacement assembly (not shown in Figs. 1A, 1B) to intersect the deposition path of the stream of polymer melt 22 when required.

Figure 1B illustrates the electro-writing system 10 of Fig. 1A in a reception configuration of the auxiliary collector 26, where the auxiliary collector 26 intersects the deposition path of the polymer melt from the print-head 12 to the main collector 16. In the illustrated configuration, the polymer melt is deposited onto the auxiliary collection surface 27 of the auxiliary collector 26 facing the print-head 12. The auxiliary collector 26 is continuously displaced relative to the print-head 12 according to a displacement direction 28 substantially perpendicular to the principal deposition direction D, such that the stream of polymer melt 22 is deposited onto a continuously varying location on the auxiliary collection surface 27, effectively depositing polymer fibers over the auxiliary collection surface according to a pattern defined by the relative displacement of the auxiliary collector 26 and the print-head 12. As a result, the polymer melt is temporarily diverted from the main collector 16 to the auxiliary collector 26, separating a section of deposited polymer melt 30 on the substrate 18 from the stream of polymer melt 22, which is effectively "cut" by the insertion of the auxiliary collector 26 between the main collector 16 and the print-head 12. While the auxiliary collector 26 is in the reception configuration, the main collector 16 may remain in position or may be (freely) repositioned during an effective interruption of the polymer deposition onto the substrate 18.

In both figures, the auxiliary collector 26 can be positioned to be moved into and out of the deposition path 20 for a controlled interruption and resumption of the polymer melt deposition process. The auxiliary collector 26 may be displaced to intersect the deposition path of the polymer melt along the displacement direction 28, and preferably parallel to a translation direction 24 between the print-head 12 and the main collector 16.

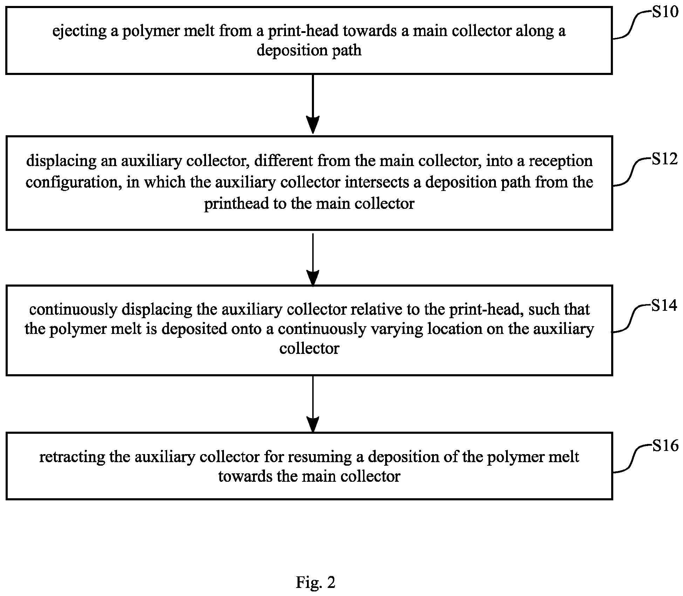

Figure 2 illustrates a flowchart detailing a method for electro-writing of a polymer melt according to an example. The process begins at step S10, where a polymer melt is ejected from a print-head 12 towards a main collector 16 along a deposition path. The polymer melt may be directed from the print-head 12 to the main collector 16 for deposition on the main collector 16 or a substrate 18 placed on top of the main collector 16. The ejection of the polymer melt may be accompanied by applying an electric potential between the main collector 16 and the print-head 12, such as by applying an electric potential to the nozzle 14 of the print-head 12 and electrically grounding the main collector 16. The print-head 12 and the main collector 16 may be configured in an electro-writing mode, in which the polymer melt is deposited controllably as polymer fibers aligned along a translation trajectory of relative movement between the print-head 12 and the main collector 16.

The method further involves displacing an auxiliary collector 26, which is different from the main collector 16, into a reception configuration (S12). The reception configuration is characterized by the auxiliary collector 26 intersecting the deposition path from the print-head 12 to the main collector 16. The auxiliary collector 26 is configured to temporarily receive the polymer melt, thereby interrupting polymer melt deposition onto the main collector 16.

The auxiliary collector 26 may be arranged in a passive configuration in which the auxiliary collector 26 is laterally displaced from a smallest gap between the nozzle 14 and the main collector 16, such as to not interfere with polymer melt deposition onto the main collector 16, and may be displaced from the passive configuration along a lateral direction, e.g. perpendicular to the principal deposition direction D, into the stream of polymer melt 22 to intersect the deposition path of the polymer melt from the nozzle 14 of the print-head 12 to the main collector 16.

In the reception configuration, the auxiliary collector 26 is continuously displaced relative to the print-head 12 (step S14), such that the polymer melt is deposited onto a continuously varying location on the auxiliary collector 26. The movement of the auxiliary collector 26 relative to the print-head 12 is for maintaining a consistent deposition process on the auxiliary collection surface 27 of the auxiliary collector 26, which may substantially maintain an electrohydrodynamic equilibrium for the duration that the auxiliary collector 26 is in the reception configuration. The auxiliary collector 26 may be continuously displaced at a displacement speed at or close to the CTS while in the reception configuration for maintaining a consistent deposition process. Preferably, the auxiliary collector 26 is continuously displaced from the passive configuration into the reception configuration and keeps moving until the auxiliary collector 26 is displaced back into the passive configuration. The skilled person will appreciate that the continuous displacement is to be understood with respect to a travel time of the polymer melt from the nozzle 14 onto the auxiliary collector 26, e.g. with intermediate speed reductions, displacement stops or direction changes maintaining movement on the scale of the travel time, i.e. any intermediate stopping of the print-head 12 should be shorter than the travel time, such as to maintain suitable deposition conditions.

In step S16 the auxiliary collector 26 is retracted to resume the deposition of the polymer melt towards the main collector 16. As a result, the deposition of the polymer melt transitions back to the primary deposition process, where the polymer melt is again directed from the print-head 12 towards the main collector 16.

The auxiliary collector 26 may be displaced continuously towards an edge of the auxiliary collector 26 prior to the retraction and may be retracted from the deposition path once the stream of polymer melt 22 approaches the edge of the auxiliary collector 26.

During the intersection of and retraction from the deposition path of the polymer melt onto the main collector 16, the auxiliary collection surface 27 of the auxiliary collector 26 may be displaced with respect to the print-head 12 at a displacement speed which is different from a displacement speed during continuous displacement in the reception configuration. For example, a retraction speed and/or an insertion speed of the edge of the auxiliary collector 26 intersecting/retracting from the stream of polymer melt 22 may be higher than a displacement speed of the auxiliary collector 26 during the continuous displacement of the auxiliary collector 26 in the reception configuration.

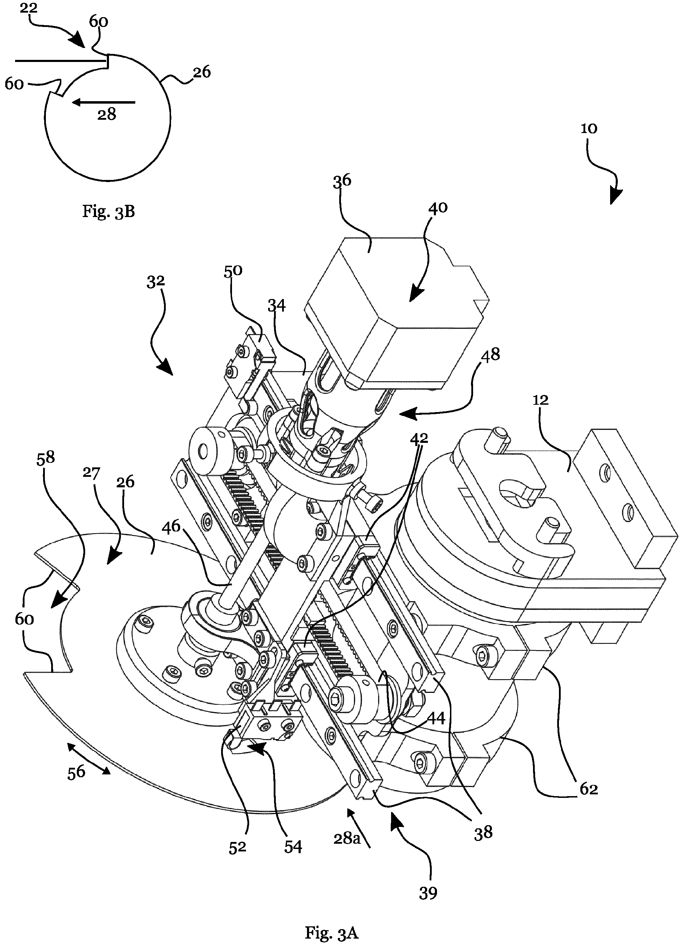

Figure 3A illustrates another example of an electro-writing system 10 for electro-writing of a polymer melt from a print-head 12 onto a main collector 16 in an isometric view (not shown in Fig. 3A), comprising a system for interrupting the deposition of polymer melt onto the main collector 16 comprising an auxiliary collector 26 and a displacement assembly 32.

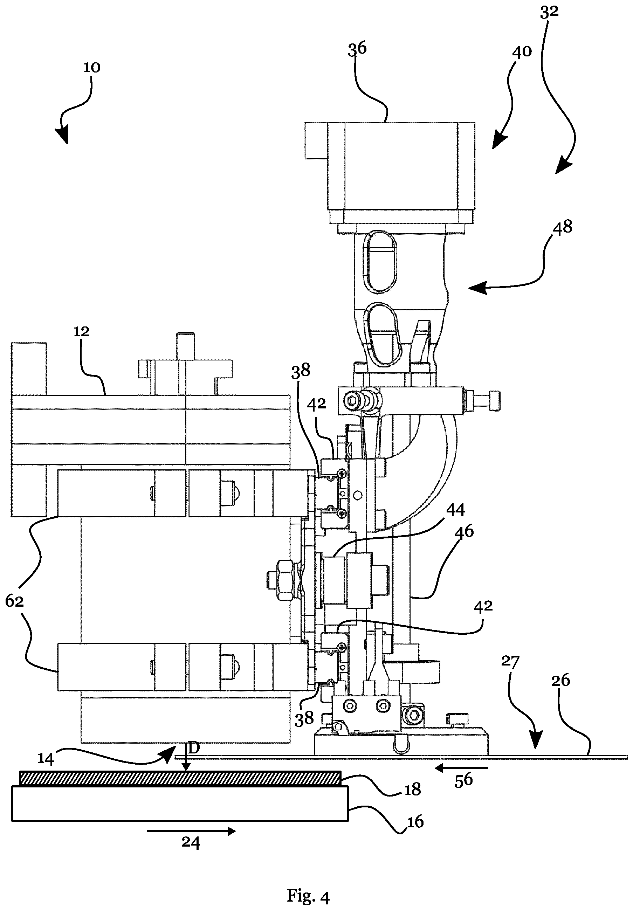

Fig. 4 shows the system 10 of Fig. 3A in a schematic side view together with a main collector 16 and a substrate 18 in a configuration, in which the auxiliary collector 26 intercepts a stream of polymer melt 22 towards the main collector 16 (indicated schematically with an arrow projecting from location of the nozzle 14 and indicating the principal deposition direction D). The side view is aligned with a linear displacement direction 28a of the displacement assembly 32, which is perpendicular to the plane of projection of Fig. 4.

The print-head 12 is configured to deposit a polymer melt onto a main collector 16 arranged below the print-head 12. The auxiliary collector 26 includes an auxiliary collection surface 27 and a cutting edge 60. The displacement assembly 32 is configured to displace the auxiliary collector 26 between a passive configuration and a reception configuration, wherein the auxiliary collector 26 intersects the deposition path from the print-head 12 to the main collector 16.

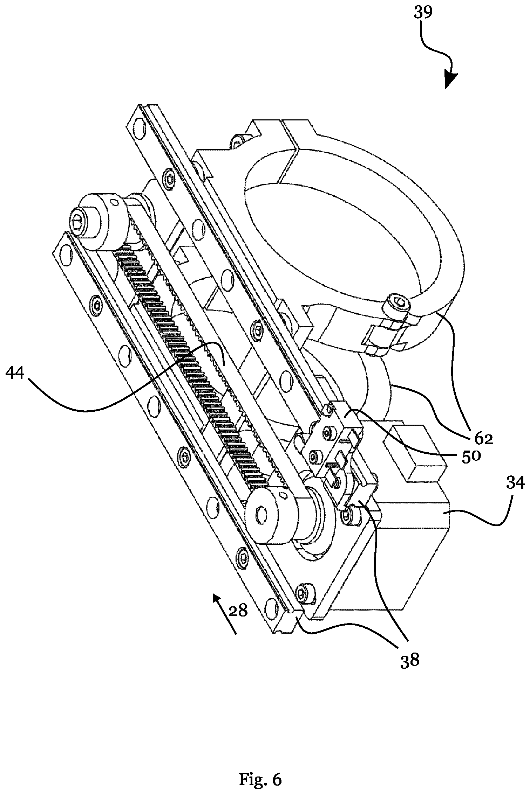

The displacement assembly 32 includes a first actuator 34 and a second actuator 36 configured to drive a first displacement subassembly 39 and a second displacement subassembly 40, respectively. The first displacement subassembly 39 is shown individually in Fig. 6 and includes the first actuator 34, a belt 44, and rails 38, which drive the linear displacement of the auxiliary collector 26. The first actuator 34 is mounted on the rails 38 and is configured to drive a movement of the belt 44, which runs in parallel to a sliding direction defined by the rails 38 between pulleys fixedly connected to the first displacement subassembly 39.

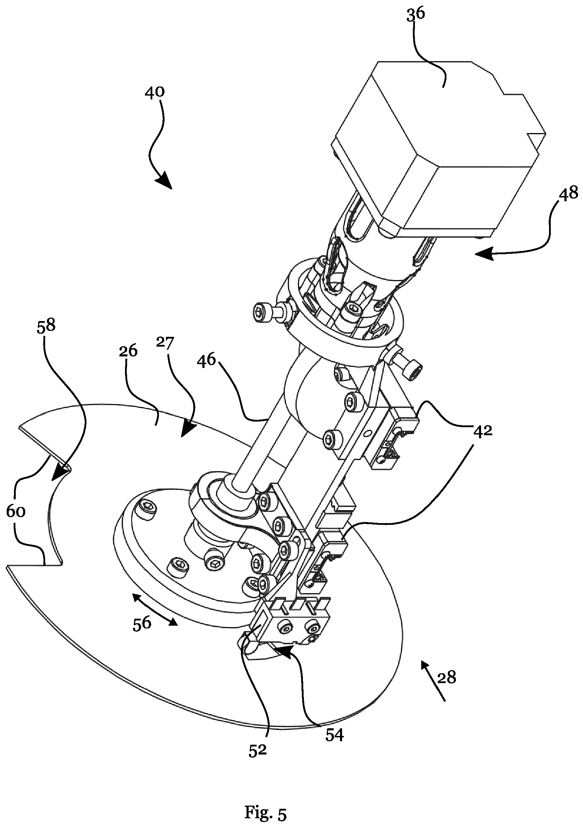

The second displacement subassembly 40 is shown individually in Fig. 5 and is responsible for the rotational movement of the auxiliary collector 26. The second displacement subassembly 40 includes a second actuator 36, sliders 42, a flexible coupling 48, and a shaft 46. The second displacement subassembly 40 is slidably mounted to the first displacement subassembly 39 via the sliders 42 slidably engaging with the rails 38, enabling the second displacement subassembly 40 and the auxiliary collector 26 to be linearly displaced along the sliding direction defined by the rails 38. The second displacement subassembly 40 is fixedly connected to a section of the belt 44, e.g. by force-locking and/or form-locking engagement of a mounting portion with the section of the belt 44, such that movement of the belt 44, driven by the first actuator 34, drives a sliding of the second displacement subassembly 40 along the rails 38.

The flexible coupling 48 connects the second actuator 36 to the shaft 46 for transmitting a torque of the second actuator 38 to the auxiliary collector 26, which can be rotated by driving the second actuator 36. The auxiliary collector 26 may be rotationally coupled to the shaft, e.g. through a magnetic mounting section fixedly connected to the shaft 46.

In the illustrated example, the first displacement subassembly 39 and the second displacement subassembly 40 comprise a first endstop sensor 50 and a second endstop sensor 52, respectively, for detecting a pre-defined endstop configuration of the first displacement subassembly 39 and the second displacement subassembly 40. The first endstop sensor 50 detects an abutment of the second displacement subassembly 40 against the first endstop sensor 50 for providing a positional reference to the first displacement subassembly 39. The second endstop sensor 52 engages with an endstop recess 54 in the auxiliary collector 26 for detecting a rotational state of the auxiliary collector 26 as a positional reference for the second displacement subassembly 40.

The skilled person will appreciate that the illustrated sensors are merely exemplary and that other position referencing strategies may be used. For example, the first displacement subassembly 39 and the second displacement subassembly 40 comprise a first optical sensor and a second optical sensor, respectively, for detecting a pre-defined positional configuration of the first displacement subassembly 39 and the second displacement subassembly 40 based on an optically detectable marker. As an example, the first optical sensor may detect a reflective marker on the second displacement subassembly 40 for providing a positional reference to the first displacement subassembly 39. The second optical sensor may detect a reflective marker on the auxiliary collector 26 for detecting a rotational state of the auxiliary collector 26 as a positional reference for the second displacement subassembly 40. The optical detector is not limited to the visual range of the spectrum of electromagnetic radiation. Alternatively, the detection may be implemented using magnetic sensors.

Rotating the auxiliary collector 26 drives a displacement of the auxiliary collection surface 27 in a circumferential direction 56. The auxiliary collector 26 comprises an engagement recess 58 delimited by cutting edges 60 in the circumferential direction 56, which are substantially aligned along a radial direction of the auxiliary collector 26 with respect to the rotation axis of the auxiliary collector 26.

A movement along the linear displacement direction 28a of the auxiliary collector 26 is controlled by the first displacement subassembly 39, which moves the auxiliary collector 26 into and out of the deposition path, and the second displacement subassembly 40 controls the rotational state of the auxiliary collector 26.

In the illustrated example, the first displacement subassembly 39 is mounted to the print-head 12 via mounting brackets, implemented in the example as shackles 62, for positioning the auxiliary collector 26 with respect to the nozzle 14. Alternatively, the displacement assembly 32 may be mounted to a printer frame mounting the print-head 12 and/or a translation assembly for the main collector 16.

When the auxiliary collector 26 is switched from the passive configuration into the reception configuration, the first actuator 34 drives the belt 44, causing the auxiliary collector 26 to move linearly along the rails 38. The auxiliary collector 26 may be oriented into an orientation, such that one of the cutting edges 60 is substantially perpendicular to the displacement vector 28 of the auxiliary collector 26 for intercepting the stream of polymer melt 22 ejected at the bottom of the print-head 12. The cutting edge 60 is designed to intersect the deposition path of the polymer melt, effectively interrupting the deposition process, by intersecting the polymer fiber jet in flight. The angle between the cutting edge 60 and the displacement vector 28 should be greater than 60 degrees, ensuring efficient cutting of the polymer stream.

As illustrated in the top view of the auxiliary collector 28 of Fig. 3B, one of the cutting edges 60 can be substantially perpendicular to the linear displacement direction 28a, with the engagement recess 58 facing the stream of polymer melt 22, such that the cutting edge 60 intercepts the stream of polymer melt 22 with a face of the cutting edge 60 substantially perpendicular to the linear displacement direction 28a.

When the auxiliary collector 26 reaches the desired position following linear displacement using the first linear displacement subassembly 39, the second actuator 36 engages, rotating the auxiliary collector 26 via the flexible coupling 48 and shaft 46. This coordinated movement allows the auxiliary collector 26 to effectively intersect the deposition path and collect the polymer melt on the auxiliary collection surface 27, while the auxiliary collector 26 is continuously displaced in the reception configuration according to a rotation of the auxiliary collector 26.

The system 10 may be configured to change the displacement direction of the auxiliary collector 26 before it is displaced from the reception configuration into the passive configuration, e.g. by inversing the rotation direction of the auxiliary collector 26 at a time which is substantially in the middle between the points in time of transitioning into and out of the reception configuration.

The relative displacement speed between the auxiliary collection surface 27 rotating below the print-head 12 is at least 50% of the critical translation speed for the polymer melt, and preferably close to the critical translation speed, for maintaining an electrohydrodynamic equilibrium during the interruption of the deposition of the polymer melt towards the main collector 16.

In operation, a control unit may receive commands to displace the auxiliary collector 26 into the reception configuration in response to an interruption command. In the reception configuration, the auxiliary collector 26 may be continuously displaced relative to the print-head 12, depositing the polymer melt onto the auxiliary collection surface 27. Once the interruption sequence is complete, the auxiliary collector 26 is retracted, and the deposition process on the main collector 16 resumes.

The machine instructions may be generated based on a computer numerical control sequence for printing a desired shape with interruption commands, wherein the interruption commands for the extrusion process may be replaced with insertion and retraction commands for the auxiliary collector 26, and optionally delays, e.g. before the printing is started.

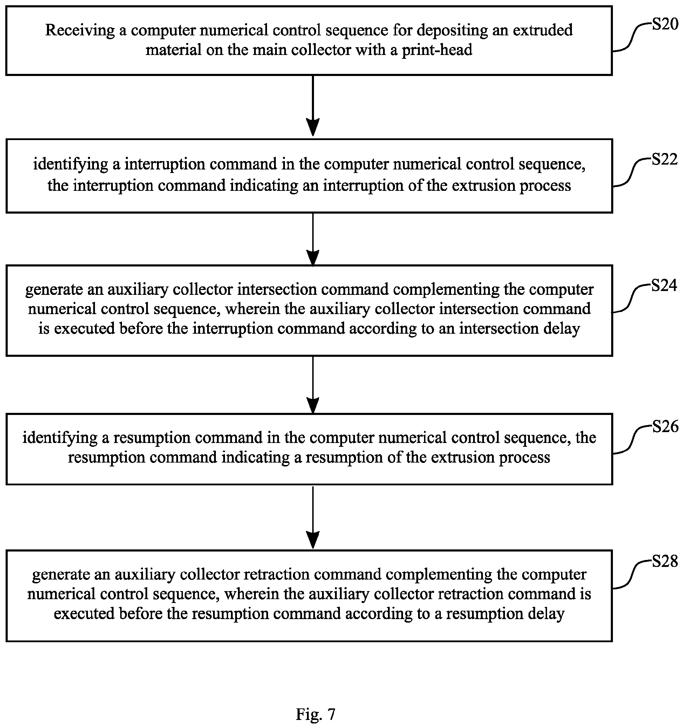

Figure 7 illustrates a flowchart detailing a method for controlling the interruption and resumption of an extrusion process in an electro-writing system 10. The process begins at step S20, where a computer numerical control sequence is received for depositing an extruded material on the main collector 16 using a print-head 12. This sequence may dictate the pattern and timing of the material deposition.

In step S22, a processing system identifies an interruption command within the computer numerical control sequence. This interruption command signifies an impending halt in the extrusion process onto the substrate 18.

Following the identification of the interruption command, step S24 involves generating an auxiliary collector intersection command. This command complements the computer numerical control sequence and is scheduled to be executed before the interruption command, based on an intersection delay. The auxiliary collector intersection command triggers displacement of the auxiliary collector 26 into the deposition path from the print-head 12 to the main collector 16, thereby intercepting the extruded material when the extrusion process is to be interrupted as part of the pattern definition.

In step S26, the system identifies a resumption command within the computer numerical control sequence. This resumption command indicates when the extrusion process should recommence.

Step S28 involves generating an auxiliary collector retraction command, which also complements the computer numerical control sequence. This command is executed before the resumption command, according to a resumption delay. The auxiliary collector retraction command ensures that the auxiliary collector 26 is displaced out of the deposition path at time consistent with the resumption of the deposition process towards the main collector 16, allowing the printing process to resume seamlessly on the main collector 16.

As an example for a numerical control sequence for a fused filament fabrication printer, the method may be implemented by pseudocode according to the algorithmic steps of:
- Load G-code, with the G-code acting as a CNC sequence for driving extrusion position and state;
- Find print-head retraction sequences;
- Calculate time for auxiliary collector 26 to travel in to intersect fiber jet;
- compensate for this time by inserting the trigger signal to travel in earlier than the corresponding print-head retraction sequence;
- Find print-head forward push sequences;
- Calculate time for auxiliary collector 26 to travel out from intersection with fiber jet;
- compensate for this time by inserting the trigger signal to travel out earlier than the corresponding print-head forward push sequence;
- Remove all Extrusion commands;
- Save and exit.

The print-head retraction sequences and print-head forward push sequences indicating retraction and reapproach of the print-head 12 may be removed along with the extrusion command to avoid unintended movement of the print-head 12 in the melt electro-writing configuration. As a result, in the in the postprocessed G-code the retraction and forward push commands are replaced by corresponding auxiliary collector commands to enable fiber deposition on the auxiliary collector 26, while the main collector 16 is performing travel moves. Thus, there is no fiber deposition on the main collector 16 during travel moves.

As a result, the electro-writing system 10 and the method may be used in conjunction with software used for other printers not limited by a continuous deposition requirement, simplifying the workflow and enabling more complex shape definitions.

The intersection delay and the resumption delay take into account a movement delay of the auxiliary collector 26 moving into and out of the deposition path, which may depend on a current translation direction 24 of the main collector 16 with respect to the displacement direction 28 of the auxiliary collector, e.g. based on a concave or convex side of the stream of polymer melt 22 facing the auxiliary collector 26.

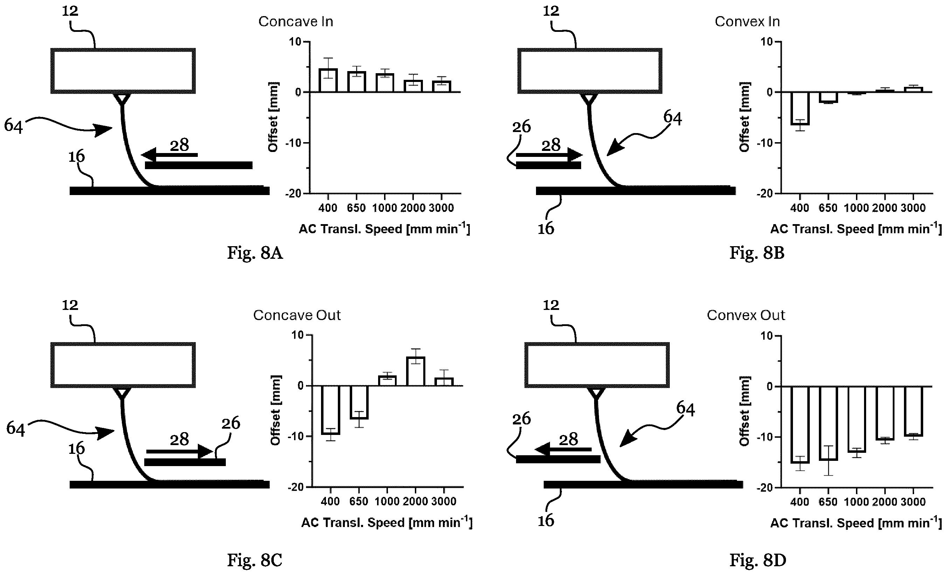

Figure 8A shows a schematic view of a "concave in" configuration of the auxiliary collector 26 interrupting a stream of polymer melt 22 with a curved deposition path 64 indicated schematically by a line from the print-head 12 to the main collector 16. The auxiliary collector 26 is positioned such that it faces the stream of polymer melt 22 from the print-head 12 at a concave side, i.e. the auxiliary collector 26 approaches the deposition path 64 at a trailing side of the stream of polymer melt 22. The accompanying graph depicts the offset of the deposited fiber location with respect to an intended end position of the deposited polymer fiber versus the displacement speed of the auxiliary collector 26 (AC translational speed). The data points on the graph indicate how the offset varies with different displacement speeds for correctly triggering the displacement of the auxiliary collector 26 given a pre-defined displacement speed. For obtaining the data of the illustrated example, a system as illustrated in Fig. 3A was employed, with the critical translation speed at around 650 mm min⁻¹.

Figure 8B illustrates a "convex in" configuration of the auxiliary collector 26 interrupting a stream of polymer melt 22 and corresponding measurement data, as in Fig. 8A. The auxiliary collector 26 is positioned such that it faces the stream of polymer melt 22 from the print-head 12 at a convex side, i.e. the auxiliary collector 26 approaches the deposition path 64 at a leading side of the stream of polymer melt 22. The graph adjacent to the schematic shows the relationship between the offset and the AC translational speed. According to the figure, in the "convex in "configuration, the offset may be minimal once the displacement speed is at or above the CTS.

Figure 8C illustrates a "concave out" configuration of the auxiliary collector 26 retracting from the deposition path 64 of the polymer melt and corresponding measurement data, as in Fig. 8A. The auxiliary collector 26 is retracted from the (undisturbed) deposition path 64 such that it faces the stream of polymer melt 22 from the print-head 12 at a concave side, i.e. the auxiliary collector 26 retracts from the deposition path 64 at a trailing side of the stream of polymer melt 22 onto the main collector 16. The graph illustrates the offset versus AC translational speed, showing how the retraction speed and configuration affect the deposition path 64 and offset values, in principle also favoring retraction speeds at or above the CTS.

Figure 8D depicts a "convex out" configuration of the auxiliary collector 26 retracting from the deposition path 64 of the polymer melt and corresponding measurement data, as in Fig. 8A. The auxiliary collector 26 is retracted from the (undisturbed) deposition path 64 such that it faces the stream of polymer melt 22 from the print-head 12 at a convex side, i.e. the auxiliary collector 26 retracts from the deposition path 64 at a leading side of the stream of polymer melt 22 onto the main collector 16. The accompanying graph plots the offset against the AC translational speed. The measured offset values illustrated in Fig. 8D are significantly increased with respect to the offset values measured in Fig. 8C, which may be attributed to the stream of polymer melt 22 having to effectively invert its curvature as the deposition path 64 transitions from the auxiliary collector 26 onto a deposition onto the main collector 16.

Thus, the system may be configured to select a retraction direction of the auxiliary collector 26 from the deposition path in accordance with a translation vector of relative movement between the main collector 16 and the print-head 12, such that the auxiliary collector 26 is retracted towards the trailing side of the deposition path 64 onto the main collector 16, once the deposition towards the main collector 16 is stabilized.

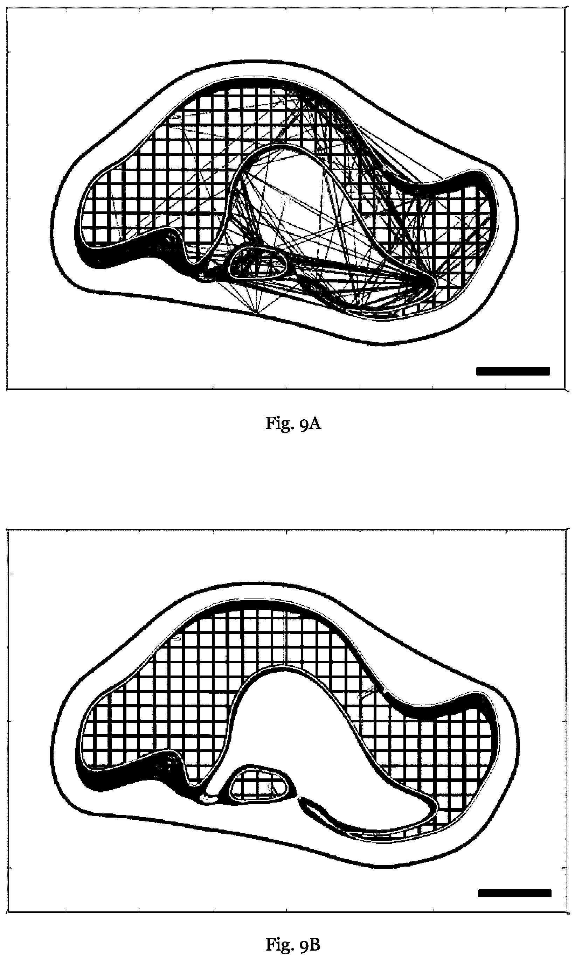

Figure 9A shows an example of a printed 3D structure with internal lattice and external contours fabricated using a conventional control sequence and electro-writing system 10. The structure depicted includes a dense internal lattice network, which provides structural integrity and support. The external contours define the outer shape of the 3D object. The fabrication process for this structure follows a continuous deposition path without interruptions. The straight lines not part of the rectangular lattice network/the external contours can result from repositioning of the print-head 12 with respect to the main collector 16 to deposit a different segment of a to-be-deposited slice of the design definition of the structure, while the print-head 12 continuously extrudes a polymer fiber.

Figure 9B illustrates a similar printed 3D structure with internal lattice and external contours based on the same shape definition, but fabricated with the use of temporary interruptions through the use of an auxiliary collector 26. The internal lattice and external contours are comparable to those in Figure 9A, maintaining the structural integrity and geometric precision. However, the use of temporary interruptions allows for a more controlled deposition process, potentially improving the overall quality of the build. Specifically, inadvertent straight line features arising from repositioning of the print-head 12 with respect to the main collector 16 in Fig. 9A can be suppressed, with the polymer melt being temporarily deposited onto the auxiliary collector 26 during said repositioning.

While both structures achieve similar end results in terms of internal lattice and external contours, the method involving temporary interruptions with an auxiliary collector may reduce the need for post-processing of the printed structure.

Although the previous examples illustrate the disclosed concepts mainly with reference to an auxiliary collector 26 with a substantially oval shape, which is rotated and displaced linearly for intercepting the stream of polymer melt 22 and/or for continuous displacement during the reception configuration, the skilled person will appreciate that other configurations and displacement assemblies 32 may be applicable. For example, the auxiliary collector 26 may be linearly displaceable along two different displacement axes for intersecting the deposition path 64 of the polymer melt from different directions and/or for changing a deposition location of the polymer melt on the auxiliary collector 26. In some examples, the auxiliary collector 26 may be in a passive configuration with the deposition path extending through an engagement recess 58 of the auxiliary collector 26, and may be rotated to intersect the deposition path.

In some examples, the displacement assembly 32 may be configured such that the rotational displacement of the auxiliary collector 26 and the linear displacement of the auxiliary collector 26 lead to different edges 60 intersecting the deposition path, e.g. a radial cutting edge 60, extending radially from the rotation axis in an engagement recess 58 of the auxiliary collector 26, and a circumferential edge, extending along a circumferential direction 56 of the auxiliary collector 26 for engaging the deposition path 64 along the radial direction of the auxiliary collector 26, respectively. The system may be configured selectively intersect the deposition path based on a current translation direction using either the radial cutting edge 60 or the circumferential cutting edge.

The shape of the auxiliary collector 26 and/or its auxiliary collection surface 27 may also be polygonal, e.g. rectangular, and/or the auxiliary collector 26 may define an aperture for permitting a stream of polymer melt 22 through the aperture in a passive configuration, wherein displacement of the auxiliary collector may "cut" the stream of polymer melt 22 at the perimeter of the aperture for interrupting the deposition onto the main collector 16.

Moreover, although the examples mainly pertain to a metallic and electrically grounded auxiliary collector 26, other examples may feature an auxiliary collector 26 made from polymeric materials or with a voltage applied to the auxiliary collector 26, which may be opposite to the voltage applied at the print-head 12 or the main-collector 16.

The examples of the present disclosure disclosed herein only constitute specific examples for illustration purposes. The present invention can be implemented in various ways and with many modifications without altering the underlying basic properties. Therefore, the present invention is only defined by the claims as stated below.

## Claims

1. A system for interrupting electro-writing of a polymer liquid (22, 30) from a print-head (12) towards a main collector (16), the system comprising
an auxiliary collector (26), different from the main collector (16), for receiving the polymer liquid (22, 30) on an auxiliary collection surface (27);
a displacement assembly (32) configured to relatively displace the auxiliary collector (26) and the print-head (12) between a passive configuration, in which the print-head (12) is arranged to deposit the polymer liquid (22, 30) on the main collector (16), and a reception configuration, in which the auxiliary collector (26) intersects a deposition path (64) from the print-head (12) to the main collector (16);
wherein, in the reception configuration of the displacement assembly (32), the auxiliary collector (26) is continuously displaced relative to the print-head (12), such that the polymer liquid (22, 30) is deposited onto a continuously varying location on the auxiliary collection surface (27).

2. The system of claim 1, wherein the auxiliary collector (26) comprises a cutting edge (60), wherein the cutting edge (60) is oriented substantially perpendicular to a displacement vector of the auxiliary collector (26), as the auxiliary collector (26) intersects the deposition path (64) from the print-head (12) to the main collector (16), and/or wherein an angle between the cutting edge (60) and the displacement vector is greater than 45°, preferably greater than 60°, more preferably greater than 75°.

3. The system of any one of the preceding claims, wherein a displacement vector of the auxiliary collector (26), as the auxiliary collector (26) intersects the deposition path (64) from the print-head (12) to the main collector (16), is aligned with a principal axis of a translation assembly for relative movement between the print-head (12) and the main collector (16).

4. The system of any one of the preceding claims, wherein the auxiliary collector (26) is rotatably mounted to the displacement assembly (32), and the displacement assembly (32) is configured to rotate the auxiliary collector (26) for continuously displacing the auxiliary collector (26) relative to the print-head (12); and/or
wherein the displacement assembly (32) is configured to linearly displace the auxiliary collector (26) from the passive configuration into the reception configuration, and vice versa.

5. The system of any one of the preceding claims, wherein a cutting edge (60) of the auxiliary collector (26) comprises a wedged cross-section, wherein an angle between a lateral face of the cutting edge (60) and the auxiliary collection surface (27) is smaller than 90° for intersecting the deposition path (64) of the polymer liquid (22, 30).

6. The system of any one of the preceding claims, wherein the system is configured to change a displacement direction (28) of the auxiliary collector (26) before the auxiliary collector (26) is displaced from the reception configuration into the passive configuration; and/or
wherein the system is configured to delay a resumption of a deposition process on the main collector (16) in accordance with a retraction delay for displacing the auxiliary collector (26) from the reception configuration into the passive configuration until deposition of the polymer liquid (22, 30) towards the main collector (16) is resumed.

7. The system of any one of the preceding claims, wherein a relative displacement speed between the auxiliary collector (26) and the print-head (12) is at least 50% of a critical translation speed for the polymer liquid, in particular at least 90% or 100% of the critical translation speed for the polymer liquid (22, 30).

8. The system of any one of the preceding claims, wherein, when the auxiliary collector (26) is displaced between the passive configuration and the reception configuration, the displacement assembly (32) is configured to displace the auxiliary collector (26) according to
an insertion phase, in which the auxiliary collector (26) is displaced into the deposition path (64) of the polymer liquid (22, 30) towards the main collector (16),
a collection phase, in which the auxiliary collector (26) is continuously displaced at a displacement speed with respect to the print-head (12), and
a retraction phase, in which the auxiliary collector (26) is displaced out of the deposition path (64) of the polymer liquid (22, 30) towards the main collector (16).

9. The system of claim 8, wherein the displacement speed of the auxiliary collector in the reception configuration is substantially equal to a critical translation speed of the polymer liquid (22, 30), in particular within 30% of the critical translation speed of the polymer liquid (22, 30) and/or at least equal to the critical translation speed of the polymer liquid (22, 30); and/or
wherein an insertion speed of relative displacement between the print-head (12) and the auxiliary collector (26) during the insertion phase is at least equal to the critical translation speed of the polymer liquid (22, 30); and/or
wherein a retraction speed of relative displacement between the print-head (12) and the auxiliary collector (26) during the retraction phase is at least equal to the critical translation speed of the polymer liquid (22, 30); and/or
wherein the insertion speed and/or the retraction speed are/is greater than the displacement speed in the collection phase.

10. The system of claim 8 or 9, wherein a direction (24) of relative displacement between the print-head (12) and the auxiliary collector (26) reverses in the collection phase, in particular in the middle of the collection phase.

11. The system of any one of the preceding claims, wherein the system is configured to receive a computer numerical control sequence for depositing an extruded material on a substrate (18) with a print-head (12) according to a deposition pattern comprising an interruption sequence, for interrupting deposition of the extruded material, and/or a resumption sequence, for resuming deposition of the extruded material towards the main collector, and
wherein the system is configured to generate an auxiliary collector insertion command to displace the auxiliary collector (26) from the passive configuration into the reception configuration, wherein the displacement of the auxiliary collector (26) is scheduled before the occurrence of the interruption sequence according to an insertion delay for displacing the auxiliary collector (26) from the passive configuration until the auxiliary collector (26) intersects the deposition path (64); and/or
wherein the system is configured to generate an auxiliary collector retraction command to displace the auxiliary collector (26) from the reception configuration into the passive configuration, wherein the displacement of the auxiliary collector (26) is scheduled before the occurrence of a resumption sequence according to a retraction delay for displacing the auxiliary collector (26) out from the reception configuration until the auxiliary collector (26) no longer intersects the deposition path (64);
wherein the insertion delay and/or the retraction delay are/is optionally based on a current translation direction between the main collector (16) and the print-head (12), when the interruption command occurs.

12. An electro-writing system (10) comprising the system of any one of the preceding claims, wherein the system (10) further comprises the print-head (12), the main collector (16) and optionally a voltage source configured to apply an electric potential between the print-head (12) and the main collector (16), wherein the electric potential is in particular applied to the print-head (12).

13. A method for electro-writing of a polymer liquid (22, 30), the method comprising ejecting the polymer liquid (22, 30) from a print-head (12) towards a main collector (16) along a deposition path (64);
displacing an auxiliary collector (26), different from the main collector (16), into a reception configuration, in which the auxiliary collector (26) intersects the deposition path from the print-head (12) to the main collector (16);
continuously displacing the auxiliary collector (26) relative to the print-head (12), such that the polymer liquid (22, 30) is deposited onto a continuously varying location on the auxiliary collector (26); and
retracting the auxiliary collector (26) for resuming a deposition of the polymer liquid (22, 30) towards the main collector (16).

14. A computer implemented method for an electro-writing system (10) comprising an auxiliary collection surface (27) configured to be displaced to intersect a deposition path (64) from a print-head (12) to a main collector (16), the method comprising receiving a computer numerical control sequence for depositing an extruded material on the main collector (16) with a print-head (12),
identifying an interruption command in the computer numerical control sequence, the interruption command indicating an interruption of the extrusion process,
generating an auxiliary collector intersection command complementing the computer numerical control sequence, wherein the auxiliary collector intersection command is executed before the interruption command according to an intersection delay for intersecting the collection path from the print-head (12) to the main collector (16) from a passive configuration of the auxiliary collector (26),
identifying a resumption command in the computer numerical control sequence, the resumption command indicating a resumption of the extrusion process; and generating an auxiliary collector retraction command complementing the computer numerical control sequence, wherein the auxiliary collector retraction command is executed before the resumption command according to a resumption delay for displacing the auxiliary collector (26) out from a reception configuration, in which the auxiliary collector (26) intersects the deposition path (64) from the print-head to the main collector (16), until deposition from the print-head (12) towards the main collector resumes.

15. A computer program comprising machine-readable instructions, which when the computer program is executed by a processing system cause the processing system to carry out a method according to any one of claims 13 or 14 and/or to implement and/or to control a system according to any one of claims 1-12.
